# EUROPEAN PATENT SPECIFICATION

(11) **EP 3 450 520 B1**
(45) Date of publication and mention of the grant of the patent: **19.01.2022**
(21) Application number: 17189495.9
(22) Date of filing: 05.09.2017
(51) Int. Cl.: C09J 11/08, C09J 7/30

(54) **ADHESIVE COMPOSITION AND USE THEREOF FOR PROVIDING A SELF-HEALING ADHERED ROOFING SYSTEMS**
KLEBSTOFFZUSAMMENSETZUNG UND VERWENDUNG DAVON ZUR BEREITSTELLUNG EINES SELBSTHEILENDEN GEKLEBTEN DACHSYSTEMS
COMPOSITION ADHÉSIVE ET SON UTILISATION POUR FOURNIR DES SYSTÈMES DE TOITURE AUTO-ADHÉSIFS À AUTO-RÉPARATION

(43) Date of publication of application: 06.03.2019
(73) Proprietor: SIKA TECHNOLOGY AG, 6340 Baar (CH)
(72) Inventor: Carl, Wilfried, 8820 Wädenswil (CH); von Rotz, Josef, 6064 Kerns (CH); Haufe, Markus, 8048 Zürich (CH)
(74) Representative: Sika Patent Attorneys

(56) References cited:
- WO-A1-87/03225
- WO-A1-03/020800
- WO-A2-2007/016265
- US-A1- 2014 044 956

## Description

### Technical field

The invention relates to the field of adhesive compositions and use thereof for providing self-healing adhered waterproofing and roofing systems.

### Background of the invention

In the field of construction, polymeric sheets, which are often referred to as membranes or panels, are used to cover underground and above ground constructions, such as basements, tunnels, and flat and low-sloped roofs. The flat roof structures can be provided both as single-ply systems composed of one single roofing membrane adhered to the roof substrate or as multi-ply systems based on the use of roofing membranes composed of multiple layers of different materials. Both types of structures have their own advantages and disadvantages. Generally the single-ply structures have the advantage of lower production costs compared to multi-ply systems but they are also less resistant to mechanical damages caused by punctures of sharp objects.

Commonly used materials for single-ply roofing membranes include thermoplastics such as plasticized polyvinylchloride (PVC-p), thermoplastic olefins (TPE-O, TPO), and elastomers such as ethylene-propylene diene monomer (EPDM). Such membranes are typically delivered to a construction site in rolls, transferred to the place of installation, unrolled, and adhered to the roof substrate by using mechanical and/or adhesive means. The roof substrate on which the membrane is adhered may be comprised of variety of materials depending on the installation site. The roof substrate may be, for example, a concrete, metal, or wood deck, or it may include an insulation board or recover board and/or an existing membrane.

The roofing membranes must be secured to the roof substrate to provide sufficient mechanical strength to resist the shearing forces applied on it, for example due to high wind loads. The membrane can be mechanically fastened to the roof substrate using screws and/or barbed plates. Mechanical fastening enables high strength bonding but it provides direct attachment to the roof substrate only at locations where a mechanical fastener affixes the membrane to the surface, which makes mechanically attached membranes susceptible to flutter. Membranes can also be secured to the roof substrate by adhesive attachment, which allows the formation of a fully adhered roofing system. In this case the majority, if not all, of the membrane is secured to the roof substrate by using adhesive bonding.

Fully adhered roofing systems can be prepared by using a number of techniques. The roofing membrane may be adhered to the roofing substrate by a method of contact bonding. In this case both the membrane and the surface of the roof substrate are first coated with a solvent or water based contact adhesive after which the membrane is contacted with the surface of the substrate. The volatile components of the contact adhesive are "flashed off" to provide partially dried adhesive films prior to contacting the membrane with the substrate. A fully adhered roofing system can also be prepared by using membrane composites having a pre-applied adhesive layer coated onto one of the major surfaces of the membrane. Typically the pre-applied adhesive layer is covered with a release liner to prevent premature unwanted adhesion and to protect the adhesive layer from moisture, fouling, and other environmental factors. At the time of use the release liner is removed and the membrane is secured to the substrate without using additional adhesives. Roofing membranes having a pre-applied adhesive layer covered by release liner are also known as "peel and stick membranes".

In order to create a waterproofed roof constructions based on the use of multiple membranes having a width less than the waterproofed area, the edges of adjacent membranes must be overlapped to form sealable joints. These joints can be sealed by bonding the bottom surface an overlapping edge to the top surface of another overlapping edge or by using sealing tapes bonded to top surfaces of both overlapping edges. The technique for bonding the overlapping surfaces of the adjacent membranes depends on the materials of the membranes and also on the type of the roof substrate. In case of membranes composed of thermoplastic or non-crosslinked elastomeric materials, the overlapping portions of adjacent membranes can be bonded to each other by heat-welding. The adhesive bonding of the overlapping portions can be conducted using the same or different adhesive as that used for bonding the membranes to the roofing substrate.

Irrespective of the means used for securing the roofing membranes to the roof substrate, a modern single-ply flat roof structures have a general disadvantage of having low resistance to mechanical impacts caused by objects falling on the roof. Damaging of the membrane may occur, for example, during the construction or inspection phases or as a result of hailstone impacts. Such damages may also be generated by extensive traffic across the roof surface or by storing of heavy equipment on the roof, for example, during façade cleaning. Once the roofing membrane has been damaged, it cannot anymore perform its waterproofing function, which results in water ingress into the building with subsequent damage to the building structure and goods inside the building.

When the leakage in the membrane is discovered, the repair typically consists of patching the opening and thereby leaving the moisture trapped in the system. In a typical adhered roof system, the trapped moisture will degrade the adhesive bond and/or the cohesive strength of the top surface of the insulation or cover board below causing localized delamination of the assembly and making the roof susceptible to significant damage under wind load. Furthermore, small breaches in membranes are often difficult to localize and in many cases the leakage is discovered only after the water has already caused significant damage to the building structures. The concept of self-healing structures has been known for many years and it has been successfully used, for example, in sealing of tire punctures.

WO 2010/070466 A1 discloses a waterproof lamination roof underlay with nailhole sealing property, which is based on the use of a copolymer sealing layer composed of ethylene methyl acrylate thermoplastic resin between the other layers of a multiple waterproof roof underlay structure. The technical solution presented in WO 2010/070466 A1 is based on creeping of highly viscous sealing layer. This process is very slow and it requires elevated temperature and a pressure gradient, both of which may not be available when a leak in a roofing membrane has to be blocked. The method is also limited to sealing of gaps between intruding foreign objects, such as nails, and the body of the membrane but it is not suitable for sealing a hole in the membrane. There thus remains a need for improved self-healing fully adhered roofing systems, which are able to maintain their watertightness even in case of mechanical damages caused by punctures of sharp objects.

### Summary of the invention

The object of the present invention is to provide an adhesive composition, which can be used for providing self-healing fully adhered roofing systems, which maintain their watertightnesss in case of mechanically damaged roofing membrane.

Another object of the present invention is to provide a method for forming self-healing adhered roofing systems.

The subject of the present invention is an adhesive composition as defined in claim 1.

It was surprisingly found out that an adhesive composition comprising a certain amount of powdered superabsorber polymers can be used for providing self-healing adhered roofing systems.

One of the advantages of the adhesive composition of the present invention is that it has sufficient water absorption capacity, which is responsible for the self-healing effect in adhered roofing systems but it also provides good adhesion on most of the materials used in typical roof substrates.

Another advantage of the adhesive composition of the present invention is that it can be used as a contact adhesive for bonding roofing membranes to substrates to form fully adhered roofing systems.

Other aspects of the present invention are presented in other independent claims. Preferred aspects of the invention are presented in the dependent claims.

### Brief description of the Drawings

Fig. 1 shows a cross-section of a self-healing fully adhered roofing system in case of damaged roofing membrane.
Fig. 2 shows a cross-section of an adhered roofing system without self-healing effect in case of damaged roofing membrane.

### Detailed description of the invention

The subject of the present invention is an adhesive composition comprising:
a) At least one rubber component,
b) At least one organic solvent,
c) At least one powdered superabsorber polymer, wherein the at least one powdered superabsorber polymer comprises 15 - 40 wt.-%, of the total weight of the adhesive composition, wherein the at least one organic solvent has a standard boiling point measured at a pressure of 1 bar using an ebulliometer of at or below 200 °C, preferably at or below 150 °C.

Substance names beginning with "poly" designate substances which formally contain, per molecule, two or more of the functional groups occurring in their names. For instance, a polyol refers to a compound having at least two hydroxyl groups. A polyether refers to a compound having at least two ether groups.

The term "rubber" refers to any natural, synthetic, or modified high molecular weight polymer or combination of polymers, which is capable of recovering from large deformations, i.e. has elastic properties. The rubber can be, or already is, modified to a state in which it is essentially insoluble (but can swell) in a boiling solvent. The term "rubber" may be used interchangeably with the term "elastomer."

The term "organic solvent" refers to non- aqueous solvents and combinations of non-aqueous solvents, and, in particular, to solvents comprising organic compounds.

The term "superabsorber polymer" or "super absorbent polymer" refers to special class of polymers that can absorb and retain extremely large amounts of a liquid relative to their own mass. For example, such superabsorber polymers may be able to absorb up to 300 times its weight of water.

The term "molecular weight" refers to the molar mass (g/mol) of a molecule or a part of a molecule, also referred to as "moiety". The term "average molecular weight" refers to number average molecular weight (Mₙ) of an oligomeric or polymeric mixture of molecules or moieties. The molecular weight may be determined by gel permeation chromatography.

The "amount or content of at least one component X" in a composition, for example "the amount of the at least one rubber component" refers to the sum of the individual amounts of all rubber components contained in the composition. For example, in case the composition comprises 20 wt.-% of at least one rubber component, the sum of the amounts of all rubber components contained in the composition equals 20 wt.-%.

The term "contact adhesive" refers to a type of adhesive used by contact bonding method. The term "bond adhesive" may be used interchangeable with the term "contact adhesive".

The term "room temperature" designates a temperature of 23 °C.

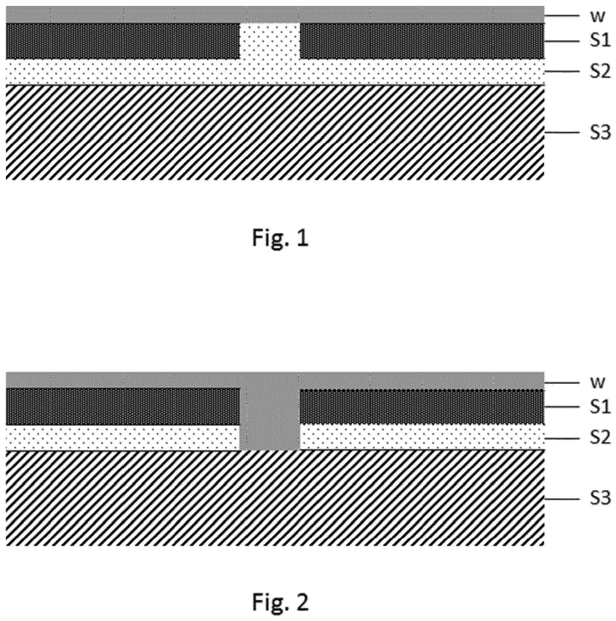

The self-healing effect obtained by the use of the adhesive composition of the present invention is based on swelling of adhesive layer by contact with water leaking through a damaged waterproofing layer. The swelling of the adhesive layer results from water being absorbed inside the superabsorber polymer particles contained in the adhesive composition and the extent of swelling is directly proportional to the amount of the powdered superabsorber polymer. In case of a self-healing adhered roofing system as presented in Figure 1, the layer of adhesive composition (S2) between the roofing membrane (S1) and the roof substrate (S3) starts to swell after being contacted with water (w) leaking through a breach in the membrane. The swelling of the layer of adhesive composition (S2) results from water being absorbed inside the superabsorber particles contained in the adhesive composition. The amount of swelling has to be sufficient to enable the adhesive layer to fill the whole volume of the breach and to form a "sealing plug" against leaking water, as presented in Figure 1. In case the water absorbing capacity of the adhesive composition is too low, no sealing plug is formed and water can continue to flow through the breach of the roofing membrane as presented in Figure 2.

Therefore, the amount of the powdered superabsorber polymer in the adhesive composition has to be high enough to enable the formation of the "sealing plug" against water leaking though a damaged membrane in fully adhered roofing systems. It was, however, also found out that the amount of the powdered superabsorber polymer cannot be increased above a certain limit without having negative impact on the other application relevant properties of the adhesive composition, in particular, adhesive bond strength. In case the amount of the powdered superabsorber in the adhesive composition was below 10 wt.-%, only a partial self-healing effect was observed, i.e. the water penetration through hole in a membrane was reduced but not fully eliminated. It was also found out that increasing the amount of superabsorber in the adhesive composition over 40 wt.-% resulted in significant deterioration of the peel strengths obtained by use of the adhesive composition. Preferably, the adhesive composition comprises 15 - 40 wt.-%, more preferably 15 - 40 wt.-%, even more preferably 20 - 35 wt.-%, most preferably 20 - 30 wt.-%, based on the total weight of the adhesive composition, of at least one powdered superabsorber polymer.

The type of the at least one superabsorber polymer used in the adhesive composition is not particularly restricted. Suitable powdered superabsorber polymers include known homo- and co-polymers of (meth)acrylic acid, (meth)acrylonitrile, (meth)acrylamide, vinyl acetate, vinyl pyrrolidone, maleic acid, maleic anhydride, itaconic acid, itaconic anhydride, vinyl sulfonic acid or hydroxyalkyl esters of such acids, wherein 0 - 95 % by weight of the acid groups have been neutralized with alkali or ammonium groups and wherein these polymers/copolymers are crosslinked by means of polyfunctional compounds. Suitable superabsorber polymers are commercially available from BASF under the trade name of HySorb^{®}, from Evonik under the trade name of FAVOR^{®} and Creabloc^{®}, and from Nippon Shokubai under the trade name of AQUALIC^{®} CA.

The particle size of the powdered superabsorber polymer is not particularly restricted. The powdered superabsorber polymer may have a median particle size d₅₀ of less than 500 µm , preferably less than 400 µm , most preferably less than 100 µm . The term median particle size d₅₀ refers to a particle size below which 50 % of all particles by volume are smaller than the d₅₀ value.

The term "particle size" refers in the present document to the area-equivalent spherical diameter of a particle. The particle size distribution can be measured by laser diffraction according to the method as described in standard ISO 13320:2009. A Mastersizer 2000 device (trademark of Malvern Instruments Ltd, GB) can be used in measuring particle size distribution.

The amount of the at least one rubber component in the adhesive composition is not particularly restricted. Preferably, the adhesive composition comprises 5.0 - 60.0 % by weight, more preferably 10.0 - 50.0 % by weight, most preferably 10.0 - 30.0 % by weight, based on the total weight of the adhesive composition, of the at least one rubber component.

According to one or more embodiments, the adhesive composition is solvent-based solution adhesive. The term "solvent-based solution adhesive" refers in the present document to an adhesive composition, wherein the adhering polymer is dissolved in the solvent. Accordingly, in the adhesive composition, the at least one rubber component is preferably substantially completely dissolved in the at least one organic solvent. By the wording "substantially completely dissolved" is meant that at least 95.0 % by weight, preferably at least 99.0 % by weight, most preferably at least 99.9 % by weight of the at least one rubber component, is dissolved in the organic solvent.

The adhesive composition is preferably a solvent based solution adhesive containing not more than 2.5 wt.-%, preferably not more than 1 wt.-%, most preferably not more than 0.5 wt.-%, based on the total weight of the adhesive composition, of water. It may be preferable that the adhesive composition is an anhydrous adhesive composition, which is substantially free of water. By the term "substantially free of water" is meant that the amount of water contained in the composition is less than 0.25 wt.-%, preferably less than 0.1 wt.-%, based on the total weight of the adhesive composition. Solvent based solution adhesives have been found be advantageous in the present invention since they provide sufficient peel strengths while being used for providing adhered roofing systems, in particular in single-ply adhered roofing systems, and since they can be easily mixed with powdered superabsorber polymers to enable sufficient water absorption capacity of the adhesive composition.

The amount and type of the at least one organic solvent contained in the adhesive composition is not particularly restricted. Typically, the amount and the type of the at least one organic solvent is selected based on the type and amount of the at least one rubber component contained in the adhesive composition. It may be preferable that the adhesive composition comprises 50 - 90 wt.-%, more preferably 60 - 85 wt.-%, based on the total weight of the adhesive composition, of the at least one organic solvent.

Suitable organic solvents have a boiling point that is not above 200 °C, preferably not above 150 °C. The term 'boiling point' refers in the present document to the standard boiling point, i.e. the boiling point at a pressure of 1 bar. The standard boiling point of a composition can be determined, for example, with an ebulliometer. Suitable organic solvents for the adhesive composition include aliphatic and aromatic hydrocarbon solvents and mixtures thereof. Preferably, the at least one organic solvent is selected from the group consisting of toluene, xylene, hexane, octane, and mixtures thereof. Furthermore, in addition to aforementioned solvents, oxygenated solvents such as ethyl acetate, acetone, tetrahydrofuran, methyl ethyl ketone, and other ketone and ester based solvents, may be contained in the adhesive composition up to 25 wt.-% of the total weight of solvents.

The type of the at least one rubber component is not particularly restricted. Any rubber component typically used in solvent-based solution adhesives can be used in the adhesive composition. It may, however, be preferable that the rubber component is selected from the group consisting of chloroprene rubber, butyl rubber, halogenated butyl rubber, acryl nitrile rubber, natural rubber, and polyurethane rubber.

According to one or more embodiments, the adhesive composition further comprises 0.1 - 20.0 wt.-%, preferably 0.5 - 15.0 wt.-%, more preferably 0.5 - 10.0 wt.-%, most preferably 1.0 - 5.0 wt.-%, based on the total weight of the adhesive composition, of particles of non-hydrated cement. The term "non-hydrated cement" refers to cement, which has not been mixed with water and reacted in a hydration reaction.

The cement contained in the adhesive composition can be any conventional cement, for example, one in accordance with the five main cement types according to DIN EN 197-1: namely, Portland cement (CEM I), Portland composite cements (CEM II), blast-furnace cement (CEM III), pozzolan cement (CEM IV) and composite cement (CEM V). These main cement types are subdivided, depending on the amount added, into an additional 27 cement types, which are known to the person skilled in the art and listed in DIN EN 197-1. Naturally, all other cements that are produced according to another standard are also suitable, for example, according to ASTM standard or Indian standard. To the extent that reference is made here to cement types according to DIN standard, this naturally also relates to the corresponding cement compositions which are produced according to another cement standard.

The particle size of the particles of non-hydrated cement is not particularly restricted. It may be preferable that the particles of non-hydrated cement have a median particle size d₅₀ of not more than 150 µm, such as not more than 100 µm, preferably not more than 75, most preferably not more than 50 µm . The median particle size d₅₀ of the non-hydrated cement particles may be, for example, in the range of 1 - 150 µm, preferably 2.5 - 100 µm, more preferably 5 - 75 µm, most preferably 7.5 - 50 µm.

According to one or more embodiments, the adhesive composition further comprises at least one hydrocarbon resin and/or at least one synthetic thermosetting resin, and/or at least one adhesion promoter. The at least one hydrocarbon resins is preferably selected from the group consisting of natural resins, chemically modified natural resins, and petroleum hydrocarbon resins.

Examples of suitable natural resins and chemically modified natural resins include rosins, rosin esters, phenolic modified rosin esters, and terpene resins. The term "rosin" is to be understood to include gum rosin, wood rosin, tall oil rosin, distilled rosin, and modified rosins, for example dimerized, hydrogenated, maleated and/or polymerized versions of any of these rosins.

Suitable terpene resins include copolymers and terpolymers of natural terpenes, such as styrene/terpene and alpha methyl styrene/terpene resins; polyterpene resins generally resulting from the polymerization of terpene hydrocarbons, such as the bicyclic monoterpene known as pinene, in the presence of Friedel-Crafts catalysts at moderately low temperatures; hydrogenated polyterpene resins; and phenolic modified terpene resins including hydrogenated derivatives thereof.

The term "petroleum hydrocarbon resin" refers in the present document to synthetic hydrocarbon resins made by polymerizing mixtures of unsaturated monomers that are obtained from petroleum based feedstocks, such as from by-products of cracking of natural gas liquids, gas oil, or petroleum naphthas. These include also pure monomer aromatic resins, which are made by polymerizing aromatic monomer feedstocks that have been purified to eliminate color causing contaminants and to precisely control the composition of the product. Petroleum hydrocarbon resins typically have a relatively low average molecular weight, such in the range of 250 - 5,000 g/mol, and a glass transition temperature of above 0 °C, preferably equal to or higher than 15 °C, more preferably equal to or higher than 30 °C.

Suitable hydrocarbon petroleum resins include C5 aliphatic petroleum hydrocarbon resins, mixed C5/C9 aliphatic/aromatic petroleum hydrocarbon resins, aromatic modified C5 aliphatic petroleum hydrocarbon resins, cycloaliphatic petroleum hydrocarbon resins, mixed C5 aliphatic/cycloaliphatic petroleum hydrocarbon resins, mixed C9 aromatic/cycloaliphatic petroleum hydrocarbon resins, mixed C5 aliphatic/cycloaliphatic/C9 aromatic petroleum hydrocarbon resins, aromatic modified cycloaliphatic petroleum hydrocarbon resins, C9 aromatic petroleum hydrocarbon resins, as well hydrogenated versions of the aforementioned resins. The notations "C5" and "C9" indicate that the monomers from which the resins are made are predominantly hydrocarbons having 4-6 and 8-10 carbon atoms, respectively. The term "hydrogenated" includes fully, substantially as well as at least partially hydrogenated resins. Partially hydrogenated resins may have a hydrogenation level, for example, of 50 %, 70 %, or 90 %.

Suitable synthetic thermosetting resins to be used in the adhesive composition include those materials obtained by the condensation of phenol or substituted phenol with an aldehyde. These materials may also be referred to as phenolic resins or phenol formaldehyde resins.

The adhesive composition may further comprise one or more additives selected from reinforcing and non-reinforcing fillers, UV absorbers, UV stabilizers, heat stabilizers, antioxidants, flame retardants, optical brighteners, pigments, dyes, and biocides. Suitable fillers that can be used include inorganic fillers such as calcium carbonate, clays, silica, talc, titanium dioxide, magnesium oxide, zinc oxide, carbon black, and mixtures thereof. The additives, if used at all, preferably comprise not more than 20 wt.-%, more preferably not more than 10 wt.-%, most preferably not more than 5 wt.-%, of the total weight of the adhesive composition.

The preferences given above for the at least one powdered superabsorber polymer apply equally to all aspects of the present invention unless otherwise stated.

Another subject of the present invention is a self-healing membrane composite comprising:
a) A waterproofing membrane and
b) A layer of anhydrous adhesive composition coated on and covering at least portion of one of the major surfaces of the waterproofing membrane,
wherein the anhydrous adhesive composition comprises at least 50 wt.-%, of at least one powdered superabsorber polymer, said proportion being based the total weight of the adhesive composition excluding the weight of organic solvent(s) that may be present, wherein the anhydrous adhesive composition is an adhesive composition according to any of claims 1-5.

The term "anhydrous adhesive composition" refers in the present documents to adhesive compositions, which are substantially free of water, i.e. adhesives containing less than 0.25 wt.-%, preferably less than 0.1 wt.-%, based on the total weight of the adhesive, of water.

The waterproofing membrane is a sheet-like element having first and second major surfaces, i.e. top and bottom surfaces, defined by peripheral edges. The layer of anhydrous adhesive composition is coated on one of the major surfaces of the waterproofing membrane, i.e. the layer of anhydrous adhesive composition is directly connected to one of the exterior surfaces of the waterproofing membrane. The expression "directly connected" is understood to mean in the context of the present document that no further layer or substance is present between the exterior surface of the waterproofing membrane and the layer of anhydrous adhesive composition.

The layer of anhydrous adhesive composition may be coated on portion of one of the major surfaces of the waterproofing membrane or substantially on the entire area of one of the major surfaces of the waterproofing layer. It may preferable that at least 50 %, more preferably at least 70 %, most preferably at least 90 %, of the area of one of the major surfaces of the waterproofing layer is covered by the layer of adhesive anhydrous adhesive composition. In case the anhydrous adhesive composition is used for bonding the overlapping portions of adjacent membrane composites, the layer of anhydrous adhesive composition is preferably coated on substantially entire area of one of the major surfaces of the waterproofing layer. The term "substantially entire area" refers here to at least 95 % of the area, preferably at least 97.5 % of the area.

The waterproofing membrane may be a single-ply waterproofing membrane comprising one single waterproofing layer or a multi-ply waterproofing membrane comprising of two or more waterproofing layers having a different compositions. Both single-ply and multi-ply waterproofing membranes may comprise, in addition to the waterproofing layer(s), at least one reinforcement layer to improve the dimensional stability and strength of the waterproofing membrane. In case of multi-ply waterproofing membranes, the term "first and second major surfaces of the waterproofing membrane" refer to the first and second primary exterior surfaces of the multi-ply membrane. Such single-ply and multi-ply waterproofing membranes are known to a person skilled in the art and they may be produced by any conventional means, such as by way of extrusion or co-extrusion through a conventional extrusion die, calendaring or by spread coating.

According to one or more embodiments, the waterproofing membrane is a single ply waterproofing membrane comprising one single waterproofing layer, preferably composed of polymeric material. It may be advantageous that the single-ply waterproofing membrane comprises, in addition to the waterproofing layer, at least one reinforcement layer, such as a layer of fiber material, a mesh, or a scrim, for example, a polyester scrim. The at least one reinforcement layer may be at least partially embedded into the waterproofing layer or be present as a center layer inside the waterproofing layer.

The term "fiber material" refers in the present document to materials composed of fibers. The fibers can comprise or consist of organic or synthetic material. These include in particular cellulose fibers, cotton fibers, protein fibers, synthetic organic fibers, and synthetic inorganic fibers. Suitable synthetic fibers include fibers made of polyester, a homopolymer or copolymer of ethylene and/or propylene, viscose, nylon, and glass. The fibers can be short fibers or long fibers, spun, woven or unwoven fibers or filaments. The fibers can moreover be aligned or drawn fibers. Moreover, it may be advantageous to use different fibers, both in terms of geometry and composition, together.

According to one or more further embodiments, the waterproofing membrane is a multi-ply waterproofing membrane having at least one top and one bottom waterproofing layers, preferably composed of polymeric material. The top waterproofing layer may be homogeneous or comprise at least one reinforcement layer, such as a layer of fiber material, a mesh, or a scrim, for example, a polyester scrim. In addition, the bottom waterproofing layer may comprise a layer of fiber material or a layer of foamed material laminated on one of its major surfaces, preferably on the second major surface facing away from the first major surface, which is preferably bonded to the second major surface of the top waterproofing layer.

It can be advantageous that the waterproofing membrane further comprises a top-coating, which is applied on the major surface of the waterproofing membrane facing away from the layer of anhydrous adhesive composition. The top-coating may comprise UV-absorbers and/or thermal stabilizers to protect the waterproofing membrane from damaging influence of sunlight. The top-coating may also comprise color pigments in order to provide the waterproofing membrane with a desired color.

The material of the waterproofing layer(s) is not particularly restricted. Any polymeric material providing sufficient watertightness can in principle be used. The waterproofing layer may comprise or be composed of at least one thermoplastic or at least one elastomeric polymer, preferably selected from the group consisting of polyvinylchloride (PVC), propylene diene rubber (EPR, EPDM), ethylene - vinyl acetate co-polymers (EVA), ethylene - acrylic ester copolymers, ethylene - α-olefin co-polymers, ethylene - propylene copolymers, polypropylene (PP), polyethylene (PE), chlorosulfonated polyethylene (CSPE), or polyisobutylene (PIB), and mixtures thereof.

The waterproofing membrane may have a thickness, measured by using the method as defined in DIN EN 1849-2 standard, of 0.1 - 20.0 mm, preferably 0.5 - 10.0 mm, more preferably 0.5 - 5.0 mm, most preferably 0.5 - 2.5 mm.

The particles of the at least one superabsorber polymer are preferably distributed throughout the entire volume of the layer of anhydrous adhesive composition. The term "distributed throughout" is understood to mean that essentially all portions of the layer of adhesive composition contain superabsorber particles but it does not necessarily imply that the distribution of the superabsorber particles is completely uniform the layer, i.e. the layer of anhydrous adhesive composition may contain regions, which have a slightly higher concentration of superabsorber particles than other regions.

It may be preferable that the particles of the at least one super absorber polymer constitute not more than 15 wt.-%, preferably not more than 10 wt.-%, most preferably not more than 5 wt.-%, of the sum of weights of the waterproofing membrane and the layer of anhydrous adhesive composition.

The thickness of the layer of anhydrous adhesive composition depends on the type of adhesive composition and on the application related requirements, such as required adhesive bond strength between the waterproofing membrane and the substrate on which the membrane is bonded using the layer of adhesive. It may be preferable that the layer of anhydrous adhesive composition has a coating weight in the range of 100 - 1500 g/m², more preferably 150 - 1250 g/m², most preferably 250 - 1000 g/m².

The anhydrous adhesive composition is preferably a structural adhesive, more preferably a structural adhesive selected from the group consisting of solvent-based adhesives, polymer dispersion adhesives, pressure sensitive adhesives (PSA), non-reactive hot-melt adhesives (HMA), reactive hot-melt adhesives (R-HMA), and one and multi-component, in particular two-component, chemically curing adhesives such as those based on epoxy and polyurethane chemistry.

According to one or more embodiments, the anhydrous adhesive composition is the adhesive composition of the present invention. In this embodiment, the layer of anhydrous adhesive composition has preferably a wet coating weight of 250 - 1250 g/m², more preferably 450- 1000 g/m², most preferably 550 - 850 g/m². The term "wet coating weight" refers in the present document to the coating weight of the adhesive composition present on surface of a waterproofing membrane in wet state, i.e. before the liquid components, in particular solvents, present in the adhesive composition have been evaporated. Membrane composites having a layer of adhesive composition of the present invention coated on the surface of the waterproofing membrane with a wet coating weight in the above cited ranges have been found to provide sufficient adhesive bond strengths required in providing fully adhered roofing systems.

Another subject of the present invention is a method for forming a self-healing adhered roofing system, the method comprising steps of:
i) Applying an adhesive composition of the present invention to at least portion of a surface of a substrate to form a first continuous wet film of adhesive,
ii) Applying an adhesive composition of the present invention to at least portion of one of the major surfaces of a roofing membrane to form a second continuous wet film of adhesive,
iii) Allowing the solvent contained in the wet adhesive films to at least partially evaporate to form first and second at least partially dried adhesive films suitable for contact bonding,
iv) Contacting the first at least partially dried adhesive film with the second at least partially dried adhesive film to form an adhesive bond between the roofing membrane and the substrate.

The adhesive composition may be applied on the surfaces of the substrate and roofing membrane by using any conventional means such as by using conventional rollers, power rollers, brushes, drop spreaders, squeegee, or by spraying. Preferably, the adhesive composition is applied the surface of the substrate and roofing membrane by using a roller, brush, squeegee, or by spraying.

The roofing membrane is a sheet-like element having first and second major surfaces, i.e. top and bottom surfaces, defined by peripheral edges. The adhesive composition may be applied to cover only a portion or substantially the entire area of one of the major surfaces of the roofing membrane. It may be preferable that the adhesive composition is applied over at least 50 %, more preferably at least 70 %, most preferably at least 90 %, of the area of one of the major surfaces of the roofing membrane. In case the same adhesive composition is used for bonding the overlapping portions of adjacent roofing membranes, the adhesive composition is preferably applied over substantially the entire area of one of the major surfaces of the roofing membrane.

According to one or more embodiments, the adhesive composition is applied on one of the major surfaces of the roofing membrane with a wet coating weight of 250 - 1250 g/m², more preferably 450- 1000 g/m², most preferably 550 - 850 g/m². The term "wet coating weight" refers in the present document to the coating weight of the adhesive composition before the liquid components, in particular solvents, present in the adhesive composition have been evaporated. Wet coating weights of the adhesive composition in the above cited ranges have been found to provide sufficient adhesive bond strengths required in fully adhered roofing systems.

The structure of the roofing membrane is not particularly limited in the present invention but the membrane should fulfill the general requirements as defined in DIN 20000-201:2015-08 standard. Both single-ply and multi-ply roofing membranes are suitable. Such single-ply and multi-ply roofing membranes are known to a person skilled in the art and they may be produced by any conventional means, such as by way of extrusion or co-extrusion through a conventional extrusion die, calendaring or by spread coating.

According to one or more embodiments, the roofing membrane is a single ply roofing membrane comprising one single waterproofing layer, preferably composed of polymeric material. It may be advantageous that the single-ply roofing membrane comprises, in addition to the waterproofing layer, at least one reinforcement layer, such as a layer of fiber material, a mesh, or a scrim, for example, a polyester scrim. The at least one reinforcement layer may be at least partially embedded into the waterproofing layer or be present as a center layer inside the waterproofing layer.

According to one or more further embodiments, the roofing membrane is a multi-ply roofing membrane having at least one top and one bottom waterproofing layers, preferably composed of polymeric material. The top waterproofing layer may be homogeneous or comprise at least one reinforcement layer, such as a layer of fiber material, a mesh, or a scrim, for example, a polyester scrim. In addition, the bottom waterproofing layer may comprise a layer of fiber material or a layer of foamed material laminated on one of its major surfaces, preferably on the second major surface facing away from the first major surface, which is preferably bonded to the second major surface of the top waterproofing layer.

It can also be advantageous that the roofing membrane further comprises a top-coating, which is applied to the major surface of the roofing membrane facing away from the applied layer of adhesive composition. The top-coating may comprise UV-absorbers and/or thermal stabilizers to protect the adhered roofing system from damaging influence of sunlight. The top-coating may also comprise color pigments in order to provide the roofing membrane with a desired color.

The material of the waterproofing layer(s) is not particularly restricted. Any polymeric material providing sufficient watertightness can in principle be used. The waterproofing layer may comprise or be composed of at least one thermoplastic or at least one elastomeric polymer, preferably selected from the group consisting of polyvinylchloride (PVC), propylene diene rubber (EPR, EPDM), ethylene - vinyl acetate co-polymers (EVA), ethylene - acrylic ester copolymers, ethylene - α-olefin co-polymers, ethylene - propylene copolymers, polypropylene (PP), polyethylene (PE), chlorosulfonated polyethylene (CSPE), or polyisobutylene (PIB), and mixtures thereof.

The roofing membrane may have a thickness, measured by using the method as defined in DIN EN 1849-2 standard, of 0.1 - 20.0 mm, preferably 0.5 - 10.0 mm, more preferably 0.5 - 5.0 mm, most preferably 0.5 - 2.5 mm.

The roofing membrane is typically provided in a form of a prefabricated membrane, which is delivered to the construction site and unwound from rolls to provide sheets having a width of 1 - 5 m and length of several times the width. However, the membrane can also be used in the form of strips having a width of typically 1 - 20 cm, for example so as to seal joints between two adjacent roofing membranes. Moreover, the roofing membrane can also be provided in the form of planar bodies, which are used for repairing damaged locations in existing adhered roofing systems.

The substrate on which the roofing membrane is adhered is preferably selected from the group consisting of an insulation board, a cover board, and an existing roofing membrane.

Still another subject of the present invention is a self-healing adhered roofing system comprising:
a) A substrate,
b) A roofing membrane directly adhered over at least part of one of its major surfaces to a surface of the substrate with a layer of anhydrous adhesive composition,
wherein the anhydrous adhesive composition comprises at least 50 wt.-%, preferably at least 60 wt.-%, of at least one powdered superabsorber polymer, said proportion being based the total weight of the adhesive composition
excluding the weight of organic solvent(s) that may be present, wherein the anhydrous adhesive composition is an adhesive composition according to any of claims 1-5.

The roofing membrane is directly adhered over a portion or over substantially the entire area of one of its major surfaces to the surface of the substrate. The expression "directly adhered" is understood to mean in the context of the present document that no further layer or substance is present between the major surface of the roofing membrane and the layer of anhydrous adhesive composition. It may be preferable that the roofing membrane is directly adhered to the surface of the substrate over at least 50 %, more preferably at least 70 %, most preferably at least 90 %, of the area of one of the major surfaces of the roofing membrane. In case the anhydrous adhesive composition is used for bonding the overlapping portions of adjacent roofing membranes, the anhydrous adhesive composition is preferably applied over substantially the entire area of one of the major surfaces of the roofing membrane.

The substrate of the self-healing adhered roofing system is preferably selected from the group consisting of an insulation board, a cover board, and an existing roofing membrane.

The thickness of the layer of anhydrous adhesive composition depends on the type of adhesive composition and on the application related requirements, such as required adhesive bond strength between the roofing membrane and the substrate on which the membrane is bonded using the layer of adhesive.

According to one or more embodiments, the thickness of the layer of anhydrous adhesive in its cured state is 0.1 - 2.0 mm, preferably 0.1 - 1.5 mm, most preferably 0.1 - 1.0 mm. The term "cured state" refers to a state of the adhesive composition after it has been physically and/or chemically cured. The type of curing mechanism depends on the embodiment of the anhydrous adhesive composition. For example in case the anhydrous adhesive composition is a of solvent-based solution adhesive, the cured state refers to the adhesive after complete evaporation of the organic solvent content(s).

It may be preferable that the particles of the at least one super absorber polymer constitute not more than 15 wt.-%, preferably not more than 10 wt.-%, most preferably not more than 5 wt.-%, of the sum of weights of the roofing membrane and the layer of anhydrous adhesive composition.

The anhydrous adhesive composition is preferably a structural adhesive, preferably selected from the group consisting of solvent-based adhesives, polymer dispersion adhesives, pressure sensitive adhesives (PSA), non-reactive hot-melt adhesives (HMA), reactive hot-melt adhesives (R-HMA), and one and multi-component chemically curing adhesives such as those based on epoxy and polyurethane chemistry. According to one or more embodiments, the anhydrous adhesive composition is the adhesive composition of the present invention.

Preferably, the layer of anhydrous adhesive composition has a water absorbing capacity in the range of 50 - 500 g/m², in particular 100 - 400 g/m². Even though the superabsorber polymers are generally able to absorb up to the 300 times of their weight of water in a state of free expansion, their water absorbing capacity is significantly reduced while being mixed with an anhydrous adhesive composition. For example in case of a solvent-based solution adhesive, the water absorbing capacity of the superabsorber polymer in the adhesive composition is limited to 20-40 times of the weight of the superabsorber polymer due to the restoring network forces of the dried rubber component.

The substrate is preferably selected from the group consisting of an insulation board, a cover board, and an existing roofing membrane.

### Examples

The followings compounds and products shown in Table 1 were used in the examples:

**Table 1**

| Sarnacol 2170 | Contact adhesive with 20 wt.-% solids | Sika Corporation USA |
|---|---|---|
| Creabloc SIS-TR | Superabsorber in particulate form | Evonik Industries |
| Sarnafil G410-15 | PVC roofing membrane | Sika Corporation USA |

### Preparation of test specimens

The self-healing and adhesive bond strength of the inventive and comparative adhesive compositions were measured using composite test specimens comprised of a strip of Sarnafil G410-15 roofing membrane bonded on the top surface of a standard plywood substrate.

The exemplary adhesive compositions were produced by mixing Creabloc SIS-TR superabsorber particles with Sarnacol 2170 contact adhesive in amounts presented in Table 1 using a container with a suitable mixing apparatus.

For the production of test specimens, plywood substrates having dimensions of 5 cm x 30 cm were first evenly covered with approximately 2/3 of an adhesive composition batch using a squeegee. The applied layer was dried for approximately 30 minutes until the surface of the adhesive was not anymore tacky. Then a strip of the Sarnafil roofing membrane having dimensions of 5 cm x 30 cm was coated with the remaining 1/3 of the adhesive composition batch and the applied layer of adhesive was dried for approximately 3 minutes until the adhesive was slightly moist ("stringy" according to finger test). The two layers were then contacted after which the membrane strip and the plywood substrate were pressed together for a time of approximately 5 seconds using a weight of 1 kg. The thus obtained composite test specimens were stored for one week at normal room temperature and relative humidity (23 °C, 50 % RH) before determination of the self-healing and bond strength properties.

The adhesive compositions were applied on the surface of the ply wood substrates and roofing membrane strips such that the total wet coating weight of both adhesive layers before pressing the membrane strip together with the plywood substrate was approximately 750 g/m². After storing the test specimen for one week at room temperature the dry coating weight of the adhesive layer between the membrane strip and the plywood substrate was approximately 150 g/m².

### Self-healing

The self-healing property of the adhesive compositions was determined by cutting a 10 mm x 10 mm hole on the roofing membrane strip of each composite test specimen and setting the thus obtained sample under ponding water for a period of 1 hour. In case the adhesive composition swollen due to the water absorption was able to form "a sealing plug" filling the hole and thus to prevent water leaking through the hole, the adhesive composition was considered to have a full self-healing capacity as presented in Figure 1. In case the swollen adhesive formed a "sealing plug" but it was not sufficient to fill the hole and to stop the water flow through the hole, the adhesive composition was considered to have a partial self-healing capacity. In case no sealing plug was formed, the adhesive composition was considered to have no self-healing capacity as presented in Figure 2.

### Adhesive bond strength

The adhesive bond strength of the adhesive compositions was determined based on peel resistance measurements.

The average peel resistances upon peeling the roofing membrane strip from the surface of the plywood substrate were measured using a Zwick tensile testing apparatus equipped with a 90°-peeling device.

In the peel resistance measurement, the edges of the test specimen were first clamped with the grips of the material testing apparatus. Subsequently, the sample strip was peeled off from the surface of the ply wood substrate at a peeling angle of 90 ° and at a constant cross beam speed of 100 mm/min. The peeling of the sample strip was continued until a length of approximately 20 cm of the strip was peeled off from the surface of the substrate. The average peel resistance was calculated as average peel force per width of the strip [N/ 50 mm] during peeling over a length of approximately 12 cm thus excluding the first and last fifth of the total peeling length from the calculation.

The average peel resistance values presented in Table 1 have been calculated as an average of measured values obtained with two test specimen prepared using the same adhesive composition.

**Table 2**

| | Sarnacol 2170 [g] | SAP [g] | Self-healing | 90 °C peel strength [N/50 mm] |
|---|---|---|---|---|
| Ref-1 | 100 | 0 | No | 60 |
| Ref-2 | 100 | 10 | Partial | 90 |
| Ex-1 | 100 | 20 | Yes | 130 |
| Ex-2 | 100 | 30 | Yes | 120 |
| Ex-3 | 100 | 40 | Yes | 120 |
| Ref-3 | 0 | 100 | Yes | 0 |

## Claims

1. An adhesive composition comprising:
a) At least one rubber component,
b) At least one organic solvent,
c) At least one powdered superabsorber polymer,
wherein the at least one powdered superabsorber polymer comprises 15 - 40 wt.-% of the total weight of the adhesive composition, wherein the at least one organic solvent has a standard boiling point measured at a pressure of 1 bar using an ebulliometer of at or below 200 °C, preferably at or below 150 °C.

2. The adhesive composition according to claim 1 comprising 5 - 60 wt.-%, based on the total weight of the adhesive composition, of the at least one rubber component.

3. The adhesive composition according to claim 1 or 2 comprising 10 - 50 wt.-%, based on the total weight of the adhesive composition, of the at least one rubber component.

4. The adhesive composition according to any of previous claims, wherein the at least one rubber component is selected from the group consisting of chloroprene rubber, butyl rubber, halogenated butyl rubber, acryl nitrile rubber, natural rubber, and mixtures thereof.

5. The adhesive composition according to any of previous claims further comprising 0.1 - 20.0 wt.-%, preferably 0.5 - 10.0 wt.-%, based on the total weight of the adhesive composition, of non-hydrated cement particles.

6. A self-healing membrane composite comprising:
a) A waterproofing membrane and
b) A layer of anhydrous adhesive composition coated on and covering at least portion of one of the major surfaces of the waterproofing membrane,
wherein the anhydrous adhesive composition comprises at least 50 wt.-% of at least one powdered superabsorber polymer, said proportion being based the total weight of the adhesive composition excluding the weight of organic solvent(s) that may be present, wherein the anhydrous adhesive composition is an adhesive composition according to any of claims 1-5.

7. The membrane composite according to claim 6, wherein the particles of the at least one superabsorber polymer are distributed throughout the entire volume of the layer of anhydrous adhesive composition.

8. The membrane composite according to claim 6 or 7, wherein the particles of the at least one super absorber polymer constitute not more than 15 wt.-%, preferably not more than 10 wt.-%, of the sum of weights of the waterproofing membrane and the layer of anhydrous adhesive composition.

9. A method for forming a self-healing adhered roofing system, the method comprising steps of:
i) Applying an adhesive composition according to any of claims 1-5 to at least portion of a surface of a substrate to form a first continuous wet film of adhesive,
ii) Applying an adhesive composition according to any of claims 1-5 to at least portion of one of the major surfaces of a roofing membrane to form a second continuous wet film of adhesive,
iii) Allowing the solvent contained in the wet adhesive films to at least partially evaporate to form first and second at least partially dried adhesive films suitable for contact bonding,
iv) Contacting the first at least partially dried adhesive film with the second at least partially dried adhesive film to form an adhesive bond between the roofing membrane and the substrate.

10. The method according to claim 9, wherein the adhesive composition is applied over at least 50 %, preferably over at least 70 %, of one of the major surfaces of the roofing membrane.

11. The method according to claim 9 or 10, wherein the substrate is selected from the group consisting of an insulation board, a cover board, and an existing roofing membrane.

12. A self-healing adhered roofing system comprising:
a) A substrate,
b) A roofing membrane directly adhered over at least part of one of its major surfaces to a surface of the substrate with a layer of an anhydrous adhesive composition,
wherein the anhydrous adhesive composition comprises at least 50 wt.-% of at least one powdered superabsorber polymer, said proportion being based the total weight of the adhesive composition excluding the weight of organic solvent(s) that may be present, wherein the anhydrous adhesive composition is an adhesive composition according to any of claims 1-5.

13. The adhered roofing system according to claim 12, wherein the layer of anhydrous adhesive composition has a thickness, measured by using the method as defined in DIN EN 1849-2 standard, of 0.1 - 2.0 mm, preferably 0.1 - 1.5 mm.

## Patentansprüche

1. Klebstoffzusammensetzung, umfassend:
a) mindestens eine Kautschukkomponente,
b) mindestens ein organisches Lösungsmittel,
c) mindestens ein pulverförmiges Superabsorberpolymer, wobei das mindestens eine pulverförmige Superabsorberpolymer 15 - 40 Gew.-% des Gesamtgewichts der Klebstoffzusammensetzung ausmacht, wobei das mindestens eine organische Lösungsmittel einen Standardsiedepunkt, gemessen bei einem Druck von 1 bar unter Verwendung eines Ebulliometers, von 200 °C oder darunter, bevorzugt von 150 °C oder darunter aufweist.

2. Klebstoffzusammensetzung nach Anspruch 1, umfassend 5 - 60 Gew.-%, bezogen auf das Gesamtgewicht der Klebstoffzusammensetzung, der mindestens einen Kautschukkomponente.

3. Klebstoffzusammensetzung nach Anspruch 1 oder 2, umfassend 10 - 50 Gew.-%, bezogen auf das Gesamtgewicht der Klebstoffzusammensetzung, der mindestens einen Kautschukkomponente

4. Klebstoffzusammensetzung nach einem der vorhergehenden Ansprüche, wobei die mindestens eine Kautschukkomponente ausgewählt ist aus der Gruppe bestehend aus Chloroprenkautschuk, Butylkautschuk, halogeniertem Butylkautschuk, Acrylnitrilkautschuk, Naturkautschuk und Mischungen davon.

5. Klebstoffzusammensetzung nach einem der vorhergehenden Ansprüche ferner umfassend 0,1 - 20,0 Gew.-%, bevorzugt 0,5 - 10,0 Gew.-%, bezogen auf das Gesamtgewicht der Klebstoffzusammensetzung, an nicht hydratisierten Zementteilchen.

6. Selbstheilender Membranverbundstoff, umfassend:
a) eine Abdichtungsmembran und
b) eine Schicht aus einer wasserfreien Klebstoffzusammensetzung, die auf mindestens einen Teil einer der Hauptflächen der Abdichtungsmembran aufgetragen wird und diese bedeckt,
wobei die wasserfreie Klebstoffzusammensetzung mindestens 50 Gew.-% mindestens eines pulverförmigen Superabsorberpolymers umfasst, wobei der Anteil auf das Gesamtgewicht der Klebstoffzusammensetzung ohne das Gewicht des/der organischen Lösungsmittel(s), das/die vorhanden sein kann/können, bezogen ist, wobei die wasserfreie Klebstoffzusammensetzung eine Klebstoffzusammensetzung nach einem der Ansprüche 1-5 ist.

7. Membranverbundstoff nach Anspruch 6, wobei die Teilchen des mindestens einen Superabsorberpolymers über das gesamte Volumen der Schicht aus wasserfreier Klebstoffzusammensetzung verteilt sind.

8. Membranverbundstoff nach Anspruch 6 oder 7, wobei die Teilchen des mindestens einen Superabsorberpolymers nicht mehr als 15 Gew.-%, bevorzugt nicht mehr als 10 Gew.-%, der Summe der Gewichte der Abdichtungsmembran und der Schicht aus wasserfreier Klebstoffzusammensetzung ausmachen.

9. Verfahren zum Herstellen eines selbstheilenden geklebten Dachsystems, wobei das Verfahren die folgenden Schritte umfasst:
i) Auftragen einer Klebstoffzusammensetzung nach einem der Ansprüche 1 bis 5 auf mindestens einen Teil einer Oberfläche eines Substrats, um einen ersten kontinuierlichen Nassfilm aus Klebstoff zu bilden,
ii) Auftragen einer Klebstoffzusammensetzung nach einem der Ansprüche 1-5 auf mindestens einen Abschnitt einer der Hauptoberflächen einer Dachmembran, um einen zweiten kontinuierlichen nassen Klebstofffilm zu bilden,
iii) mindestens teilweises Verdampfenlassen des in den nassen Klebstofffilmen enthaltenen Lösungsmittels, um erste und zweite, zumindest teilweise getrocknete Klebstofffilme zu bilden, die für Kontaktverklebungen geeignet sind,
iv) Inkontaktbringen des ersten, zumindest teilweise getrockneten Klebstofffilms mit dem zweiten, zumindest teilweise getrockneten Klebstofffilm, um eine Klebstoffverbindung zwischen der Dachmembran und dem Substrat herzustellen.

10. Verfahren nach Anspruch 9, wobei die Klebstoffzusammensetzung auf mindestens 50 %, bevorzugt auf mindestens 70 %, einer der Hauptflächen der Dachmembran aufgetragen wird.

11. Verfahren nach Anspruch 9 oder 10, wobei das Substrat aus der Gruppe ausgewählt wird, die aus einer Dämmplatte, einer Abdeckplatte und einer vorhandenen Dachmembran besteht.

12. Selbstheilendes, geklebtes Dachsystem, das Folgendes umfasst:
a) ein Substrat,
b) eine Dachmembran, die zumindest auf einem Teil einer ihrer Hauptflächen mit einer Schicht aus einer wasserfreien Klebstoffzusammensetzung direkt auf eine Oberfläche des Substrats geklebt ist,
wobei die wasserfreie Klebstoffzusammensetzung mindestens 50 Gew.-% mindestens eines pulverförmigen Superabsorberpolymers umfasst, wobei der Anteil auf das Gesamtgewicht der Klebstoffzusammensetzung ohne das Gewicht des/der organischen Lösungsmittel(s), das/die vorhanden sein kann/können, bezogen ist, wobei die wasserfreie Klebstoffzusammensetzung eine Klebstoffzusammensetzung nach einem der Ansprüche 1-5 ist.

13. Verklebtes Dachsystem nach Anspruch 12, wobei die Schicht der wasserfreien Klebstoffzusammensetzung eine Dicke von 0,1 - 2,0 mm, bevorzugt 0,1 - 1,5 mm, aufweist, gemessen nach dem in der Norm DIN EN 1849-2 definierten Verfahren.

## Revendications

1. Composition d'adhésif comprenant :
a) au moins un composant de type caoutchouc,
b) au moins un solvant organique,
c) au moins un polymère superabsorbant en poudre,
l'au moins un polymère superabsorbant en poudre représentant 15 à 40 % en poids du poids total de la composition d'adhésif, l'au moins un solvant organique possédant un point d'ébullition standard mesuré à une pression de 1 bar à l'aide d'un ébulliomètre égal ou inférieur à 200 °C, préférablement égal ou inférieur à 150 °C.

2. Composition d'adhésif selon la revendication 1 comprenant 5 à 60 % en poids, sur la base du poids total de la composition d'adhésif, de l'au moins un composant de type caoutchouc.

3. Composition d'adhésif selon la revendication 1 ou 1 comprenant 10 à 50 % en poids, sur la base du poids total de la composition d'adhésif, de l'au moins un composant de type caoutchouc.

4. Composition d'adhésif selon l'une quelconque des revendications précédentes, l'au moins un composant de type caoutchouc étant choisi dans le groupe constitué par un caoutchouc de chloroprène, un caoutchouc de butyle, un caoutchouc de butyle halogéné, un caoutchouc d'acryle nitrile, un caoutchouc naturel et des mélanges correspondants.

5. Composition d'adhésif selon l'une quelconque des revendications précédentes comprenant en outre 0,1 à 20,0 % en poids, préférablement 0,5 à 10,0 % en poids, sur la base du poids total de la composition d'adhésif, de particules de ciment non hydraté.

6. Composite membranaire autorégénérant comprenant
a) une membrane imperméabilisante et
b) une couche de composition d'adhésif anhydre revêtue sur, et recouvrant au moins une partie d'une des surfaces principales de, la membrane imperméabilisante,
la composition d'adhésif anhydre comprenant au moins 50 % en poids de l'au moins un polymère superabsorbant en poudre, ladite proportion étant basée sur le poids total de la composition d'adhésif à l'exclusion du poids du ou des solvants organiques qui peuvent être présents, la composition d'adhésif anhydre étant une composition d'adhésif selon l'une quelconque des revendications 1 à 5.

7. Composite membranaire selon la revendication 6, les particules de l'au moins un polymère superabsorbant étant réparties dans tout le volume de la couche de composition d'adhésif anhydre.

8. Composite membranaire selon la revendication 6 ou 7, les particules de l'au moins un polymère superabsorbant ne constituant pas plus de 15 % en poids, préférablement pas plus de 10 % en poids, de la somme des poids de la membrane imperméabilisante et de la couche de composition d'adhésif anhydre.

9. Procédé pour la formation d'un système de toiture collée autorégénérante, le procédé comprenant les étapes de :
i) application d'une composition d'adhésif selon l'une quelconque des revendications 1 à 5 à au moins une partie d'une surface d'un substrat pour former un premier film mouillé continu d'adhésif,
ii) application d'une composition d'adhésif selon l'une quelconque des revendications 1 à 5 à au moins une partie d'une des surfaces principales d'une membrane de toiture pour former un deuxième film mouillé continu d'adhésif,
iii) le fait de laisser le solvant contenu dans les films d'adhésif mouillés s'évaporer au moins partiellement pour former des premier et deuxième films d'adhésif au moins partiellement séchés appropriés pour une liaison par contact,
iv) mise en contact du premier film d'adhésif au moins partiellement séché avec le deuxième film d'adhésif au moins partiellement séché pour former une liaison adhésive entre la membrane de toiture et le substrat.

10. Procédé selon la revendication 9, la composition d'adhésif étant appliquée sur au moins 50 %, préférablement au moins 70 %, d'une des surfaces principales de la membrane de toiture.

11. Procédé selon la revendication 9 ou 10, le substrat étant choisi dans le groupe constitué par un panneau d'isolation, un panneau de couverture et une membrane de toiture existante.

12. Système de toiture collée autorégénérante comprenant :
a) un substrat,
b) une membrane de toiture directement collée sur au moins une partie d'une de ses surfaces principales à une surface du substrat avec une couche d'une composition d'adhésif anhydre,
la composition d'adhésif anhydre comprenant au moins 50 % en poids de l'au moins un polymère superabsorbant en poudre, ladite proportion étant basée sur le poids total de la composition d'adhésif à l'exclusion du poids du ou des solvants organiques qui peuvent être présents, la composition d'adhésif anhydre étant une composition d'adhésif selon l'une quelconque des revendications 1 à 5.

13. Système de toiture collée selon la revendication 12, la couche de composition d'adhésif anhydre possédant une épaisseur, mesurée en utilisant le procédé tel que défini dans la norme DIN EN 1849-2, de 0,1 à 2,0 mm, préférablement de 0,1 à 1,5 mm.
